**Europäisches Patentamt**

**European Patent Office**

**Office européen des brevets**

(11) Veröffentlichungsnummer: **0 192 826**
A2

(12) # EUROPÄISCHE PATENTANMELDUNG

(21) Anmeldenummer: 85114906.2

(22) Anmeldetag: 25.11.85

(51) Int. Cl.⁴: **B 01 D 23/10**

(30) Priorität: 26.11.84 DE 3443033

(43) Veröffentlichungstag der Anmeldung:
03.09.86 Patentblatt 86/36

(84) Benannte Vertragsstaaten:
AT BE CH DE FR GB IT LI NL SE

(71) Anmelder: Schüssler, Günter
Römerstrasse 1
D-8000 München 40(DE)

(72) Erfinder: Schüssler, Günter
Römerstrasse 1
D-8000 München 40(DE)

(54) Verfahren und Vorrichtung zur Regeneration und Behandlung von Flüssigkeiten.

(57) Verfahren und Vorrichtung zur Regeneration und Behandlung von Flüssigkeiten, vorzugsweise für eine Badeeinrichtung, als Mehrkammer Stauraumund Filtersystem, mit konstanter Filterleistung und Rezirkulation von Teilströmen zwischen den einzelnen Kammern.

Fig. 1

EP 0 192 826 A2

Günter Schüssler, 8000 München

**0192826**

Verfahren und Vorrichtung zur Regeneration und Behandlung von Flüßigkeiten.

Die Erfindung betrifft ein Verfahren samt der zur Durchführung des Verfahrens notwendigen Vorrichtung, zur Regeneration und Behandlung von Flüssigkeiten, wobei als Vorrichtung zur Durchführung des Verfahrens ein Mehrkammer-Filtersystem mit konstanter Filterleistung durch Teilfiltrat-Rückzirkulation zwischen den einzelnen Filterkammern und sich daraus ergebenden Mehrfachzirkulation und -filtration innerhalb wenigstens zweier Reaktionsräumen und einer Filterkammer dient, wenigstens eine Reaktionskammer kann als Stauraum ausgebildet sein, wobei der Vorrichtung wenigstens eine Umlaufpumpe zugeordnet ist. Die Vorrichtung und das Verfahren dient vorzugsweise zu Filtrations- und Adsorptionszwecken, zur Verringerung organischer Substanzen und zur sonstigen Behandlung und Aufbereitung von Flüssigkeiten in einer Badeeinrichtung.

Dem erfindungsgemäßen Verfahren und der Vorrichtung kommt die Aufgabe zu, über ein Mehrkammer-Filtersystem, welches vorzugsweise bis zu einem vorbestimmbaren Betriebspunkt eine konstante Leistung zeigt und dem zwischen wenigstens zwei Filterkammern eine Filtraterückflußvorrichtung zugeordnet ist, innerhalb eines Wasserlaufes, vorzugsweise innerhalb eines Wasser- oder Flüßigkeitskreislaufes, eine Mehrfachzirkulation und Filtration zwischen wählbaren Filterkammern und Reaktions- oder Stauräumen zu ermöglichen und dabei Feststoffteilchen auszufiltrieren, kollodial gelöste Stoffe wenigstens in einem Reaktions- oder Stauraum zur Koagulation zu bringen und filtrierbar zu machen, durch Koagulation und Adsorption Verringerung oder Bindung organischerSubstanzen zu bewirken, gegebenenfalls die Ausgasung der Flüssigkeiten (z.B.) nach vorausgegangener Zugabe von (Ozon oder sonstigen) der Aufbereitung dienender Stoffe zu gewährleisten, sowie in einem direkt über dem Filtermedium oder vorgeschaltetem Stauraum, Schwallwasser aufzunehmen, gegebenenfalls zwischenzuspeichern, gegebenenfalls teilweise gegen Frischwasser auszutauschen und ggf. wieder aus dem Zwischenspeicher abzugeben.

Aus dem allgemeinen Filterbau sind Vorrichtungen bekannt, über welche Feststoffteilchen durch Zuhilfenahme von Quarzsand und sonstigen granulatförmigen Filtermedien ausfiltriert werden. Zur Verbesserung der Wirksamkeit dieser bekannten Vorrichtungen werden auch unterschiedliche oder kombi-

-2-

nierte Filtermedien als sogenannte Mehrschichtfilter eingesetzt. Auch der Einsatz von Filtermedien ist bekannt, deren adsorbierende Wirkung und deren Elektrodenspannung zur Bindung oder Verringerung organischer Substanzen genutzt wird, welche beispielsweise in Quarzsand nicht zurückgehalten werden können. Die bekannten Filtervorrichtungen können offene oder geschlossene Filtergehäuse besitzen, die Vorrichtungen können als Raum- oder Flächenfilter ausgebildet sein, sie können als Einzelbehälter oder in Gruppen in Einzel- Parallel- oder Hintereinanderschaltung gebildet sein. Auch sind Filter bekannt, deren Filtermedium mit Ultraschall oder Hochfrequenz beaufschlagt werden oder von Gasen durchsetzt werden, um bessere Filtrationsergebnisse und Filtermedien-Standzeiten zu erhalten. Die Reinigung bzw. Auswaschung des Filtermediums erfolgt vornehmlich durch Rückflutung, Auswaschung und Schmutzabflutung zum Kanal. Zur Flockung kollodial gelöster Stoffe werden Koagulierungsmittel verwendet. Speziell bei Badewasser-Aufbereitungseinrichtungen werden Oxydationsmittel und pH-Wert regulierende Chemikalien eingesetzt. All diese vorbeschriebenen Vorrichtungen haben wesentliche Nachteile durch Bauart und Verfahren. Die Herstellungskosten der Einheiten liegen unverhältnismäßig hoch. Die Betriebskosten liegen, bedingt durch beachtliche Frischwassererfordernisse und damit verbunden beachtlicher Heizenergieverbrauch, sehr hoch. Die Arbeitsbreite im Bereich hygienischer Sicherheit ist gering und bei Zustieg von Badegästen rasch erschöpft, wobei hier die Eintragung und die Anreicherung des Badewassers mit organischen Substanzen (z.B. gebundenes Chlor) eine wesentliche Rolle spielt. In der DE 24o5o7.4 wird eine Badewasser-Filtrationsvorrichtung der bekannten Bauart beschrieben.

Mehrschichtfilter tragen verschiedene Medien, wie z.B. Quarzsand verschiedener Körnungen und thermisch behandelte Kohle. Bedingt durch das Raumgewicht der einzelnen Filtermedien erfolgt deren Anschüttung im Filter derart, daß schwerere Medien im unteren Filterbereich zu liegen kommen, Medien mit geringerem Raumgewicht kommen in höheren Lagen zu liegen. Bei Anschüttung in entgegengesetzter Reihenfolge oder wahllos, würden sich die verschiedenen Medien bei der ersten Filterrückspülung vermischen, letztlich würden Medien mit den geringeren Raumgewichten aufschwimmen und zwangsläufig im oberen Filterbereich zu liegen kommen. Durch diese zwangsweise vorgegebene Lage der verschiedenen Medien innerhalb eines Filterbettes, auf Grund von Raumgewichten, kann bei Mehrschichtfiltern der herkömmlichen Bauart auch ein Filtermedium nicht genau dort eingesetzt werden, wo es aufgabenbedingt zu liegen kommen müsste. Quarzsand wird eingesetzt zur Ausfiltration von

0192826

Feststoffteilchen. Thermisch behandelte Kohle wird neben Filtrationsaufgaben eingesetzt zur Adsorption, wobei deren Kapillarwirkung und elektrophysikalische Eigenschaften genutzt werden. Bedingt durch das Raumgewicht liegt jedoch bei bekannten Mehrschichtfiltern der zur Ausfiltration bestimmte Quarzsand, dem die Abscheidung von Feststoffteilchen zugeordnet ist, unter der zur Adsorption bestimmten Kohle. Der Adsorptionsfilterstoff als Filter-Erstschicht übernimmt auf diesem Wege die eigentliche Funktion des Quarzsandes vorweg. Das Ergebnis einer solchen Anordnung zeigt, daß die Kapillarwirkung und die Elektrodenspannung des Adsorptionsfilterstoffes ungenügend zum Tragen kommt, weil die in großen Mengen anfallenden Feststoffteilchen den Adsorptionsfilterstoff belegen, verkleben, verbacken und isolieren. Einmal hindurchgelassene Partikel und Substanzen passieren auch das weitere Filtermedium ohne zurückgehalten zu werden. Kollodial gelöste Stoffe und organische Substanzen belasten das Badewasser (oder eine andere Flüssigkeit), was rasch zu einem Hygienerisiko führt.

Um ein solches untragbares Risiko zu vermindern wird bei bekannten Verfahren eine Verdünnung der auf dem bisherigen Verfahrensweg unfiltrierbar gebliebenen Substanzen vorgenommen, wobei der Badeanlage pro Badegast eine bestimmte Frischwasserrate zugeführt wird. Gegebenenfalls ist die Badegastfrequenz zu limitieren und eine auf Volumen bezogene Mindestaufbereitungsleistung der Filter- und Aufbereitungseinrichtung sicher zu stellen.

In der DE 252o36o wird eine Vorrichtung offenbart, welche als Mehrschichtfilter ebenfalls mit den vorausgehend beschriebenen Nachteilen behaftet ist. Die Filtermedium-Schütthöhe bei bekannten Verfahren ist sehr hoch was neben einem recht hohen Raumbedarf auch eine enorm hohe Rückflußwassergeschwindigkeit erfordert. Gemeinsam besitzen alle bekannten Filtereinrichtungen den Nachteil, daß die Filterleistungen nicht konstant sind, weil ausfiltrierte Feststoffteilchen das Filterbett beaufschlagen und somit der Wasserdurchfluß einer kondinuierlichen Veränderung durch Widerstandsbildung unterliegt, wobei im Bereich der Erschöpfung der Filterbett-Aufnahmekapazität bereits Durchdringung vorliegen kann und der widerstandsbedingte Wasserdurchsatz gerade im kritischen Bereich der Filterleistung sich besonders nachteilig noch reduziert.

Sinn und Zweck des im Folgenden beschriebenen erfindungsgemäßen Verfahrens und dessen Vorrichtung ist es, eine einfache Möglichkeit zu schaffen, welche hygienische Sicherheit im Rahmen der Aufgabenstellung schafft, kostengünstig arbeitet und kostengünstig hergestellt werden kann, filtrierende, adsorbierende, Stau- und Reaktionsraum bildende sowie bis zu einem bestimmbaren Betriebspunkt vorgegebene konstante Aufbereitungsleistung besitzt und zudem noch zu weiteren Eigenschaften ausgebildet und zu weiteren Einsatzbereichen herangezogen werden kann.

Zur Lösung dieser Aufgabe wird folgende bevorzugte Ausführungsart vorgeschlagen, wobei die:

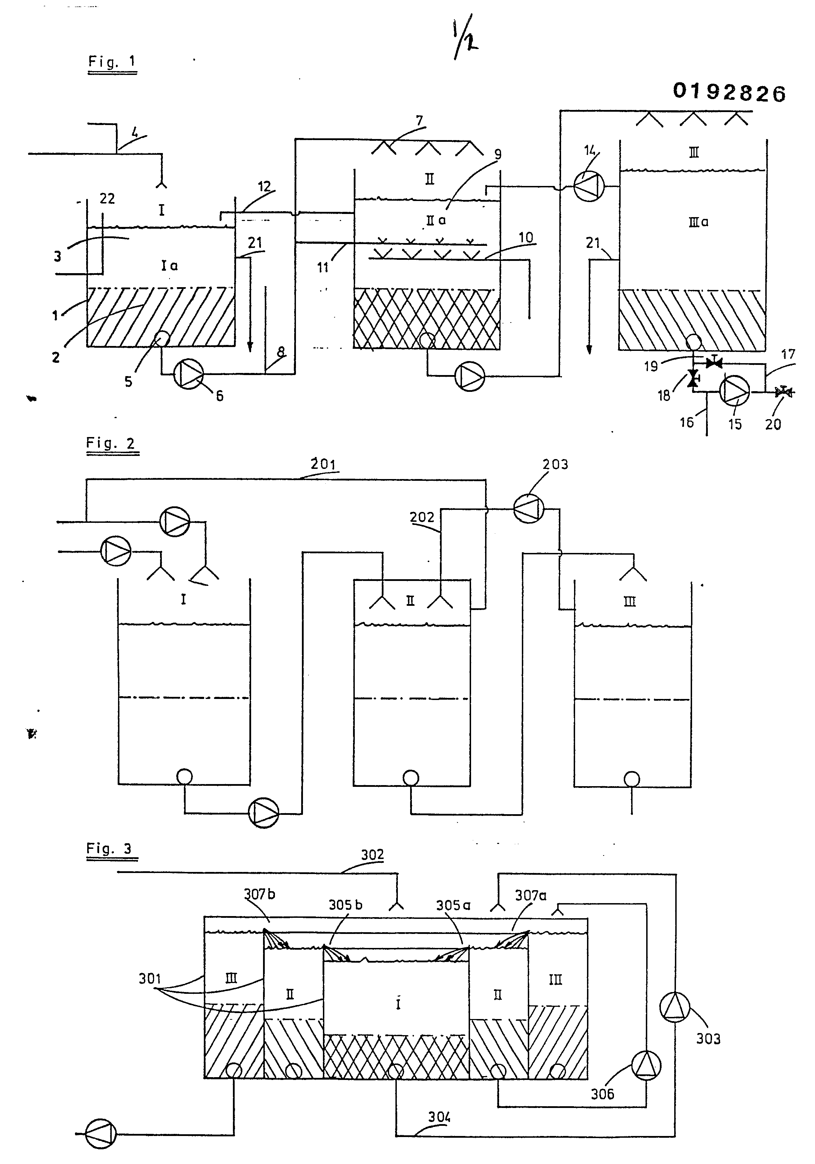

Figuren 1 - 3 schematische Seitenquerschnitte bevorzugter Ausführungsbeispiele zeigen.

Zur Vermeidung von Vermischung der verschiedenen Filtermedien wird vorgeschlagen, die einzelnen Filtermedien zu separatisieren und in der Reihenfolge anzuordnen, wie diese den Filtrationserfordernissen entspricht, wobei vorzugsweise die zu filtrierende Flüssigkeit die verschiedenen Filtermedien gemäß deren Raumwichte in Richtung von Groß nach Klein durchfließt, woraus sich z.B. ergibt, daß ein aus Quarzsand bestehendes Filtermedium mit rel. hohem Raumgewicht einem mit Hohlräumen und Kapillarwirkung versehenen Filtermedium , mit geringerem Raumgewicht, vorausgehend angelagert ist.

Fig. 1 zeigt schematisch eine derartige Anordnung, wobei in den verschiedenen Filterkammern (1, II, III u.s.w.) eine jeweils verschiedene Aufgabe erfüllt werden kann. In Kammer (I) die aus einem Gehäuse 1 besteht erfolgt vorzugsweise die mechanische Reinigung und Ausfiltration von Feststoffteilchen über das Filtermedium 2 . Über dem Filtermedium 2 befindet sich ein Freiraum 3 welcher als Stauraum zur Aufnahme von unterschiedlichen Mengen von anfallendem Schwallwasser dienen kann und als Reaktionsraum (Ia) dient. Dort kann z.B. die Ausgasung der Flüssigkeit erfolgen. Über die Impfstelle 4 kann Koagulierungsmittel zugegeben werden, die Koagulation kann in dem offenen Reaktionsraum Ia wirksam erfolgen, wobei die über einen nicht näher dargestellten Einlauf zufließende Flüssigkeit in dem Reaktionsraum eine hohe Turbulenz erzeugt, die wiederum für eine gute Vermischung ausschlaggebend ist. Durch Vorrichtung 5 wird das filterinterne Drainagesystem dargestellt. Durch eine Förderpumpe 6 wird die in Filterkammer 1 vorfiltrierte Flüssigkeit der Filterkammer II zugeführt und in dieser über eine Vorrichtung 7 versprüht. Die Filterkammer II besteht nun wiederum aus einem äußeren Gehäuse, welche das Filtermedium trägt und einem Freiraum, welcher nunmehr zur Aufnahme der in Filterkammer I vorfiltrierten Flüssigkeit dient.

Die Vorrichtung 8 zeigt eine weitere Impfstelle, über die gegebenenfalls ein weiteres Koagulierungsmittel zugegeben werden kann. Über die Vorrichtung 8 ist es jedoch auch möglich, ein Oxydationsmittel oder eine sonstige dem Aufbereitungsverfahren dienliche Substanz einzubringen. Begünstigt durch die Versprühvorrichtung 7 ist auch in dieser Kammer eine wirksame Ausgasung der Flüssigkeit gegeben, was besonders wichtig ist, wenn z.B. durch die Impfstelle 8 Ozon als Oxydationsmittel zugesetzt wird.

Die weiter aufzubereitende Flüssigkeit gelangt nun in den Reaktionsraum IIa. Feststoffteilchen, welche zuvor in Filterkammer I der Koagulation oder der Rückhalteeigenschaft des Filtermediums 2 entgangen sind können aufschwimmen oder durch ein geeignetes Koagulierungsmittel oder durch eine mechanische Hilfsvorrichtung zum Aufschwimmen gebracht werden. Dabei ist es möglich z.B. durch die Zuführung von gasförmigen Stoffen, vorzugsweise durch die Vorrichtung 1o eingeblasen, oder durch eine Flüssigkeitsströmung, die beispielsweise über die Rohrleitung 11 als Abzweig aus der Hauptleitung ausgebildet sein kann, die Auftriebsbewegung auszulösen oder zu unterstützen. Die eingeblasenen gasförmigen Stoffe können gleichzeitig auch oxydierende Eigenschaften besitzen und gegebenenfalls auch Koagulation hervorrufen.

Die Filterkammer I und die Filterkammer II stehen über eine Vorrichtung 12 in Verbindung, durch welche ein Teilstrom des Filtrates zusammen mit aufschwimmenden Stoffen wieder in die Filterkammer I zurückgeleitet werden, um einer erneuten Koagulation und Filtration zugeführt zu werden. Durch diesen sich schließenden Kreislauf ist eine Mehrfachfiltration in Kammer I gegeben, wobei die Rückführung oder Abführung und Ableitung der verschiedensten Substanzen möglich ist. Die Rückführung eines gewissen Flüssigkeitsanteiles wird vorzugsweise dadurch erreicht, daß die Abflußleistung aus Kammer II geringer ist, als die Leistung der Förderpumpe 6. Dieses System kann beliebig erweitert werden. Natürlich ist die Rückfluß-Wassermenge durch eine ganze Reihe von Möglichkeiten regulierbar. Auch kann die Rückflußflüssigkeit durch eine eigene Förderpumpe transportiert werden, die über verschiedene Parameter ansteuerbar ist 14. Durch eine solch beispielhafte Anordnung ist es ohne weiteres möglich, in den jeweiligen Kammern eine Mehrfachfiltration zu vollziehen, wobei über die Rücklaufflüssigkeit stetig Stoffe transportiert werden können, welche zuvor separatisiert wurden oder in einem vorausgegangenen Filtrations- oder Adsorptionsverfahren nicht zurückgehalten wurden. Anstelle des Rückflusses in die vorausgegangene Filterkammer kann natürlich auch Abführung und Ableitung gewählt werden. Zur Bewirkung des Auftriebes oder der Separatisation können mechanische-, thermische-, chemische-, elektrische- oder sonstige Kräfte eingesetzt werden.

In den Filterkammern II und III kann analog Filtration oder Adsorption erfolgen, wobei eine Fortsetzung und ERweiterung des Systemes möglich ist.

- 6 -

0192826

Die Rückspülung und Rückflutung des jeweiligen Filtermediums erfolgt für jede Kammer getrennt und zwar durch Ausnutzung und Umschaltung der vorhandenen Förderpumpen, wobei wie an Kammer III beispielhaft veranschaulicht, die Pumpe 15 über die Leitung 16 Rückspülwasser zuführt, welches die Leitung 17 bei Betätigung der Ventile 18, 19, 2o dem Filtermedium in umgekehrter Flußrichtung zugeführt wird, dort das Filtermedium auswäscht und als Abwasser dem Kanalanschlußstutzen 21 zufließt. Es ist jedoch auch möglich, zur Abführung des Rückspülwassers die Vorrichtung 12 zu nutzen, durch welche die einzelnen Kammern zum Zwecke des Überführens von Rücklaufwasser miteinander in Verbindung stehen. In diesem Falle würde sich das Abwasser in dem Stau- bzw. Reaktionsraum in Kammer I sammeln und könnte dort durch den Kanalanschlußstutzen ablaufen. Zur Lockerung des Filtermediums kann selbstverständlich auch Luft verwendet werden.

In einem weiteren bevorzugten Ausführungsbeispiel werden die einzelnen Filterkammern (I, II, III, u.s.w.) in geschlossener Ausführung oder wechselseitig offener und geschlossener Ausführung ausgestattet.

Fig. 2 zeigt schematisch eine Anordnung von offenen und geschlossenen Filterkammern (I, II und III). Bei dieser beispielhaften Ausführungsart, welche natürlich auch in verschiedenen Varianten aufgebaut werden kann, wird über eine Bypas-Leitung 2o1 die Wasserrückführung ermöglicht. Auch können die einzelnen Kammern durch separate Leitungen 2o2 mit eigenen Pumpen 2o3 ausgestattet sein, wobei die Pumpe(n) 2o3 über verschiedene Parameter angesteuert sein kann (können). Selbstverständlich ist es auch bei einer solchen Anordnung möglich, Impfstellen für die Zugabe weiterer Flüssigkeitsaufbereitungsstoffe an geeigneten Stellen anzuordnen. Auch ist es möglich, die vorausgehend beschriebenen Merkmale der Einrichtung in die geschlossene oder teilweise geschlossene Ausführungsart der erfindungsgemäßen Vorrichtung zu übernehmen.

Eine besonders vorteilhafte Ausführungsart der erfindungsgemäßen Einrichtung ergibt sich, wenn die einzelnen Filterkammern I, II, III, u.s.w. zu einem Block zusammengefasst werden.

Fig. 3 zeigt beispielhaft eine solche Anordnung im schematischen Schnitt, wobei die Vorrichtung aus zylindrischen Behältern 3o1 offener oder geschlossener Bauart besteht. Kammer I liegt vorzugsweise im Zentrum, sie wird von Kammer II und III umschlossen oder zumindest teilweise umschlossen. Auch eine umgekehrte Anordnung ist möglich. Die zu filtrierende Flüssigkeit wird über Vorrichtung 3o2 in Kammer I eingebracht und auf dem vorbeschriebenen Wege aufbereitet. Die Pumpe 3o3 fördert die Flüssigkeit über Rohrleitungen

-7-

0192826

304 weiter in Kammer II. Aufschwimmende Stoffe gelangen über den direkten Überlauf 305a, 305b in Kammer I zurück. Pumpe 306 saugt Kammer II ab und führt die Flüssigkeit Kammer III zu, die ebenfalls einen Überlauf 307a, 307b besitzt u.s.w. Auch für diese bevorzugte Ausführungsart gilt das vorausgehend beschriebene im Blick auf Ausstattung, Wirkungsweise und Möglichkeiten.

Ein wesentlicher Vorteil der erfindungsgemäßen Einrichtung besteht darin, daß die Aufbereitungsleistung der Vorrichtung bis zu einem vorbestimmbaren Punkt konstant bleibt. In einer bevorzugten Ausführungsart erfolgt die Konstanthaltung wie folgt: die Feststoffteilchen als Filtratrückstand sammeln sich vornehmlich im Filterbett der Kammer I an. Kammer I ist eine leistungsmäßig stärkere Pumpe zugeordnet als Kammer II u.s.w. Die Filtermedien in den Kammern II, III, u.s.w. werden von Feststoffteilchen nur in geringem Umfange beaufschlagt. Die größere Förderleistung, der jeweils als Folgekammer vorausgegangenen Förderpumpe bringt den Reaktionsraum der Folgekammer stetig zum Überlauf, woraus sich der Rückfluß eines Flüssigkeitsteilstromes und die Mehrfachfiltration ergibt. Das zur Mehrfachfiltration überlaufende Rückflußwasser ist mengenmäßig abhängig von dem Verschmutzungsgrad und dem damit verbundenen Durchflußwiderstand des vorausgegangenen Filterbettes. Sobald z.B. das Filterbett der Kammer I soweit belastet ist, daß die Förderleistung der Pumpe 6, die der Kammer II vorgeschaltet ist, nicht mehr ausreicht, um den dem Filtermedium in Kammer II vorgeschaltetem Reaktionsraum 9 zu überfluten und die Absaug - und Förderleistung der Pumpe, welche Kammer II nachgeschaltet ist, den Reaktionsraum 9 trotz Flüssigkeitszulauf aus Kammer I über Pumpe 6 absaugt, was natürlich zur Folgereaktion in den weiteren Filterkammern III u.s.w. führt. Ein einfacher Schwimmerschalter, der z.B. das Abreissen des Rücklaufwassers registriert, kann vorzugsweise in diesem Moment das Abschalten der ganzen Anlage bewirken. Nach Rückspülung der Filterkammern kann die Anlage wieder in Betrieb genommen werden. Eine weitere vorteilhafte Wirkungsweise der erfindungsgemäßen Vorrichtung ergibt sich durch die Hintereinanderschaltung der verschiedenen Filtermedien in Kammer I, II, III usw. durch eine solche Aufteilung vervielfacht sich naturgemäß die wirksame Oberfläche eines Filters, was zu besonders günstigen Filtrationsergebnissen führt, welche verständlicherweise mit einem Mehrschichtfilter der bekannten Bauart nicht erreicht werden können. Bei der Filterrückspülung ist bedingt durch die jeweils geringe Schütthöhe des aufgeteilten Filtermediums eine nur geringe Pumpenleistung und Rückspülgeschwindigkeit erforderlich, um das Filterbett wirksam

0192826

abzuheben und die ausfiltrierten Teilchen auszuwaschen.

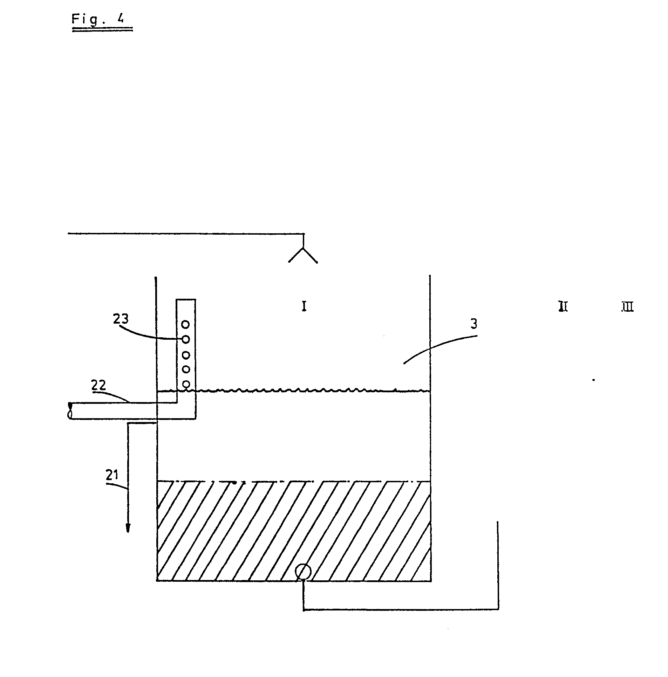

Fig. 4 zeigt eine weitere vorteilhafte Ausgestaltung, wodurch es möglich ist, über die erfindungsgemäße Vorrichtung, vorzugsweise im Stauraum der Kammer I eine pro Badegast anteilmäßige Wassermenge ablaufen zu lassen, was im besonderen bei öffentlichen Badeeinrichtungen, insbesondere bei Heißsprudelbecken wünschenswert ist. Bei Zustieg von Badegästen in den Baderaum wird naturgemäß Badewasser verdrängt. Das Verdrängungswasser wird im Stau- und Regenerationsraum der Kammer I aufgenommen. Bei Verlassen der Badegäste wird dieses zwischengespeicherte Wasser dem Baderaum wieder zugeführt. Während der Verdrängungszeit steigt deshalb der Wasserspiegel im Stau- und Reaktionsraum in einem zu der Anzahl der Badegäste stehenden Verhältnis an. Zur Abführung einer badegasbezogenen Wassermenge wird folgende Lösung vorgeschlagen:

Der Stauraum der Kammer I, 3 erhält neben dem Kanalablaufanschluß 21 ein Standrohr 22 welches als Sicherheitsablauf dient und ebenfalls an den Kanal angeschlossen ist. Dabei weist das Standrohr 22 vertikal angeordnete Bohrungen auf, die in höhenmäßigen Abständen derart angeordnet sind, daß die einzelnen Bohrungsabstände dem Wasseranstieg entsprechen, der von einer erwachsenen Person durch Wasserverdrängung im Baderaum, im Stauraum verursacht wird. Der Durchmesser einer solchen Bohrung 23 kann dem Durchsatz entsprechen, der als Wasserablauf in Ltr. pro Badegast, innerhalb einer bestimmten Zeiteinheit gewünscht wird. Sobald die Verdrängungssituation nicht mehr gegeben ist, ergibt sich zunächst im Baderaum, dann im Stauraum eine Fehlwassermenge, die über eine entsprechende Wasserstandsabfühlvorrichtung im Stauraum, mit nachgeschalteter Frischwassereinspeisung ausgeglichen werden kann. Selbstverständlich ist es möglich, der Anlage zweckentsprechend zwischen den einzelnen Filterstufen oder nach der letzten Filterstufe, wasseraufbereitende Stoffe zur Desinfektion oder zur pH-Wert Regulierung zuzuführen oder Wärmetauscher usw. anzuordnen. Auch ist es möglich, z.B. den Stauraum der Kammer I durch einen separaten Behälter auszubilden und diesen gesondert zur Aufstellung zu bringen, oder die Filterkammern in einer oder mehreren Zweiergruppen anzuordnen oder nur eine Filterkammer zu schalten, der gegebenenfalls ein Stau- und Reaktionsraum vorausgeht, jedoch ein weiterer Reaktionsraum nachgeschaltet ist, aus welchem das Rücklaufwasser der vorgeschalteten Filterkammer wieder zugeführt werden kann. Die erfindungsgemäße Vorrichtung bietet im weiteren den Vorteil, eine oder mehrere der Kammer I folgende Kammer(n) mit einem Filtermedium zu füllen, welches anstelle der nachteiligen Mehrschichtbefüllung, aus einem Gemisch unterschiedlicher Medien besteht, von denen unterschiedliche Elektrodenpotentiale (pos.-neg.) auf die zu filtrierende Flüssigkeit wirken, wobei der Effekt und die Wirkungsweise der elektrophoretischen Koaleszenz genutzt werden kann, die bei Verwendung von verschiedenen Metalloxyden, Aluminiumpulver und z.B. Kohlenstoff als Filtermedium zum Tragen kommt, wobei die zu Reinigungszwecken vorgeschaltete Kammer I Feststoffbelastungen von der (den) nachgeschalteten, als Adsorptionsfilter dienenden Kammer(n) fernhält und deshalb eine besonders günstige und wirksame Arbeitsweise erfolgen kann.

Die besonderen Vorteile des erfindungsgemäßen Verfahrens und dessen Vorrichtung liegen neben der hygienischen Sicherheit auch noch bei besonderer Wirtschaftlichkeit. In einer Versuchsanlage mit einem Heißsprudelbecken konnte bei kontinuierlichen Badebetrieb, mit einer Badegastbelastung von 5o Personen pro Stunde, über eine Betriebsdauer von 1o Stunden nachgewiesen werden, daß bei einer Filter-Umwälzrate von o,7 cbm/h pro Badegast und einer Frischwasserrate von 6 Ltr. pro Badegast, das Badewasser zu jeder Zeit bakteriologisch und hygienisch einwandfrei war. Die Wirtschaftlichkeit des erfindungsgemäßen Systemes ergibt sich im besonderen aus der enormen Filtrations- und Adsorptionsleistungfähigkeit. Während bekannte Sprudelbad-Filtrations- und Wasseraufbereitungseinrichtungen täglichen Wasserwechsel und Ersatz von 15 Ltr. Frischwasser pro Badegast voraussetzen, um die erforderlichen hygienischen Bedingungen einzuhalten, kommt die erfindungsgemäße Vorrichtung über einen längeren Zeitraum ohne Badewasserwechsel aus.

**0192826**

Günter Schüssler, 8ooo München

Verfahren und Vorrichtung zur Regeneration und Behandlung von Flüßigkeiten.

Ansprüche:

1. Verfahren und Vorrichtung als Mehrkammersystem, mit wenigstens einem Stau- und Reaktionsraum, das in einen Flüssigkeitslauf eingebaut ist und dem wenigstens eine Förderpumpe zugeordnet ist, dadurch gekennzeichnet, daß ein Filtrat-Teilstrom als Rücklauf einer ersten Filterstufe zum Zwecke der Mehrfachfiltration zugeführt wird und dabei der Filtrat-Teilstrom kommen kann aus:

   a) wenigstens aus einer Stau- und/oder Reaktionskammer

   b) wenigstens einer Filterkammer

   c) wenigstens einer Kombination aus (a+b)

2. Verfahren und Vorrichtung nach Anspruch 1, dadurch gekennzeichnet, daß der ersten Filterstufe ein eigener Stau- und Reaktionsraum vorgelagert ist und mit dieser in räumlicher Verbindung steht.

3. Verfahren und Vorrichtung nach Anspruch 1 oder 2, dadurch gekennzeichnet, daß der ersten Filterstufe wenigstens ein separater Stau- und/oder Reaktionsraum vor- und/oder nachgeschaltet ist.

4. Verfahren und Vorrichtung nach einem vorausgegangenen Anspruch, dadurch gekennzeichnet, daß wenigstens zwei Filterstufen hintereinander geschaltet sind.

5. Verfahren und Vorrichtung nach einem der vorausgegangenen Ansprüche, dadurch gekennzeichnet, daß die Vorrichtung mit einem Behälter in Verbindung steht, vorzugsweise diesen zumindest teilweise umfasst oder mit diesem eine Baueinheit bildet, aus dem die aufzubereitende Flüssigkeit in wenigstens einen Stau- und Reaktionsraum eingeleitet wird.

6. Verfahren und Vorrichtung nach einem der vorausgegangenen Ansprüche, dadurch gekennzeichnet, daß mehrere Filterkammern unterschiedliche Filtermedien tragen.

0192826

7. Verfahren und Vorrichtung nach einem vorausgegangenen Anspruch, dadurch gekennzeichnet, daß die Filterstufe(n) offene oder geschlossene oder wechselseitig offene und geschlossene Gehäuse besitzen.

8. Verfahren und Vorrichtung nach einem vorausgegangenen Anspruch, dadurch gekennzeichnet, daß die Vorrichtung durch das Ineinanderstellen von wenigstens einem Behältnis und einer Zwischenwand gebildet ist.

9. Verfahren und Vorrichtung nach einem vorausgegangenen Anspruch, dadurch gekennzeichnet, daß vor der ersten Filterstufe, vorzugsweise im Bereich des Stau- und Reaktionsraumes, wenigstens eine Impfstelle für die Zugabe von Stoffen für die Wasseraufbereitung, angeordnet ist.

lo. Verfahren und Vorrichtung nach einem vorausgegangenen Anspruch, dadurch gekennzeichnet, daß innerhalb der Vorrichtung wahlweise genutzt werden, mechanische-, thermische-, chemische-, adsorpierende- und absorbierende Kräfte, die der Behandlung der Flüssigkeit dienen.

Fig. 1

Fig. 2

Fig. 3

1/2

0192826

Fig. 4